# EUROPÄISCHE PATENTSCHRIFT

(11) **EP 0 713 442 B1**
(45) Veröffentlichungstag und Bekanntmachung des Hinweises auf die Patenterteilung: **27.05.1998**
(21) Anmeldenummer: 94922846.4
(22) Anmeldetag: 08.08.1994
(51) Int. Cl.: B25B 23/10, F16B 23/00

(54) **WERKZEUG ZUM DREHEN VON VERBINDUNGSELEMENTEN, HIERMIT VERWENDETES VERBINDUNGSELEMENT, SOWIE ANGEWANDTES VERFAHREN**
PROCESS AND TOOL FOR ROTATING CONNECTING ELEMENTS, AND CONNECTING ELEMENT USED THEREWITH
PROCEDE ET OUTIL DE MISE EN ROTATION D'ELEMENTS DE LIAISON, ET ELEMENT DE LIAISON UTILISE AVEC CET OUTIL

(30) Priorität: 09.08.1993 DE 9311857 U; 12.04.1994 DE 9406049 U
(43) Veröffentlichungstag der Anmeldung: 29.05.1996
(73) Patentinhaber: Ernst, Klaus-Hermann, D-42929 Wermelskirchen (DE)
(72) Erfinder: Ernst, Klaus-Hermann, D-42929 Wermelskirchen (DE)
(74) Vertreter: Roth, Ronald, Dipl.-Ing.
(86) Internationale Anmeldenummer: DE9400912
(87) Internationale Veröffentlichungsnummer: WO9504635

(56) Entgegenhaltungen:
- CH-A- 335 245
- US-A- 2 659 258
- US-A- 2 805 594
- US-A- 2 961 905
- US-A- 3 668 952
- US-A- 4 607 547
- US-A- 4 823 652
- US-A- 5 123 310
- US-H- 1 046

## Beschreibung

Die Erfindung betrifft ein Werkzeug zum Drehen von drehbaren Verbindungselementen und ein Verfahren zum Drehen, insbesondere Lösen, von drehbaren Verbindungselementen mittels dieses Werkzeugs. Das Werkzeug weist einen auf das Verbindungselement aufsetzbaren Kopfteil mit einer inneren Ausnehmung zur Aufnahme des Verbindungselement-kopfes auf.

Zu diesen Werkzeugen zählen alle hand- oder maschinenbetriebenen Steckschlüssel, beispielsweise Aufsteckschlüssel, Zündkerzenschlüssel, Radmutternschlüssel oder maschinenbetriebene Kraftsteckschlüssel. Auch Drehmoment-Steckschlüssel, Starter-Blockschlüssel und Einsatzringe für Freilaufknarren sowie alle Arten von Maul- bzw. Gabelschlüsseln und Ringschlüsseln, z.B. geteilte Ringschlüssel (auch Bremsleitungsschlüssel genannt), zählen zu den im Rahmen der vorliegenden Erfindung liegenden Werkzeugen. Generell ist die Erfindung bei jedem Werkzeug einsetzbar, das zum Drehen von drehbaren, insbesondere schraubbaren Verbindungselementen, insbesondere Mehrkantschrauben, Muttern oder runden Verbindungselementen wie etwa Schraub- oder Stehbolzen, geeignet ist und einen auf den Verbindungselement-Kopf aufsetzbaren, eine entsprechend profilierte Innenausnehmung aufweisenden Kopfteil besitzt. Die Werkzeuge können hierbei auch mehrteilig sein und beispielsweise die Steckschlüsseleinsätze sowie die zugehörigen Antriebe, Knarren, Gelenkgriffe u.s.w. umfassen.

Allgemein ist die innere Ausnehmung im Kopfteil des Werkzeugs so gestaltet, daß sie an die in aller Regel normierte Außenkontur der zu lösenden oder festzuschraubenden Schraube angepaßt ist. Beispielsweise besitzt die innere Ausnehmung des Werkzeugs im Fall von Steckschlüsseleinsätzen (auch als Stecknüsse bezeichnet) bei Auslegung für handelsübliche Sechskantschrauben sechs oder zwölf geradlinig verlaufende Innenwandflächen, wobei die zu betätigende Schraube mit den Kanten ihres Schraubenkopfes in den Winkelbereichen der inneren Ausnehmung einliegt. Bei Betätigung des Werkzeugs wird die Drehkraft somit über die äußeren Kantenbereiche des Schraubenkopfes in die Schraube eingeleitet. Gleiches gilt auch im Fall von Ringschlüsseln, deren innere Ausnehmung den Kopfteil vollständig durchsetzt, und auch für Maulschlüssel, die in der Regel zwei Backen mit parallel verlaufenden Flächen aufweisen, wobei die innere Ausnehmung bei diesen Schlüsseltypen sowohl durch den gesamten Kopfteil hindurchgeht als auch auf einer Seite seitlich offen ist.

Durch diese Krafteinleitung der Drehkraft primär über die Kantenbereiche der Schraubenköpfe ergibt sich insbesondere bei älteren Schrauben mit gewisser Materialerveichung oder - ermüdung, aber auch bei stark festsitzenden Schrauben das Problem, daß die aufzubringende Kraft die Festigkeit der Kantenbereiche überschreiten kann, so daß die Kanten zunehmend abgerundet werden. Diese Kantenabrundung kann soweit gehen, daß der Schraubenkopf insgesamt so stark rundgeformt wird, daß er durch die handelsüblichen Steck-, Maul- oder Ringschlüssel nicht mehr betätigt werden kann. Es sind dann spezielle Arbeitsgänge mit Abscherung des Schraubenkopfs oder dergleichen erforderlich, um die Schraube doch noch lösen zu können. Hierbei wird die Schraube in aller Regel aber zerstört und es besteht auch die erhebliche Gefahr der Beschädigung des durch die Schraube verspannten Materials. Auch läßt sich das Schraubengewinde in diesem Fall nur mit erheblichen Schwierigkeiten aus dem Schraubloch entfernen.

Weiterhin sind diese Werkzeuge zum Lösen von runden Verbindungselementen wie etwa Schraub- bzw. Stehbolzen völlig ungeeignet.

Aus der US-A-5 123 310 ist ein Werkzeug gemäß dem Oberbegriff des Anspruchs 1 bekannt. Aus der US-A-4 607 547 ist ein Werkzeug bekannt, wobei einander diametral gegenüberliegend Elemente mit zugespitzter Vorderseite in einer Ausnehmung des Werkzeugs angeordnet sind.

Der Erfindung liegt die Aufgabe zugrunde, ein Werkzeug zum Drehen von drehbaren Verbindungselementen zu schaffen, das sich durch verbesserten Gebrauchswert auszeichnet.

Diese Aufgabe wird durch die im Anspruch 1 genannten Merkmale gelöst.

Vorteilhafte Ausgestaltungen der Erfindung sind in den Unteransprüchen angegeben.

Weiterhin werden mit der Erfindung vorteilhafte, effektive Verfahren zum zuverlässigen Drehen, insbesondere Lösen von Verbindungselementen mit runden oder polygonalen oder gewellten Köpfen geschaffen sowie ein neu gestaltetes, speziell in Verbindung mit dem erfindungsgemäßen Werkzeug wirksames Verbindungselement bereitgestellt.

Bei dem erfindungsgemäßen Werkzeug sind somit zumindest zwei, im wesentlichen quer zur Mittelachse der inneren Ausnehmung bewegliche Elemente vorgesehen, die mit einer spitzen Vorderfläche versehen sind. Diese Elemente können beim Einsatz des Schraubwerkzeugs zum Lösen eines dreh-, vorzugsweise schraubbaren Verbindungselements, z.B. einer Mehrkantschraube mit dem Schraubenkopf in enge Anlage gebracht werden, so daß die Kraftübertragung zwischen dem Schraubwerkzeug und dem Schraubenkopf auch über diese zusätzlichen Elemente erfolgt. Damit werden zusätzliche Krafteinleitungsstellen geschaffen, so daß die gegenseitige Verspannung zwischen dem Schraubwerkzeug und dem Schraubenkopf der Mehrkantschraube verbessert ist. Vor allem stellt die vordere, punktförmig zulaufende Spitze der beweglichen Elemente sicher, daß sich die beweglichen Elemente - schon bei relativ geringer Kraftausübung auf die Elemente während der Zustellbewegung - zumindest teilweise punktförmig mit sehr hoher, da punktförmig wirkender Flächenpressung in das Material des Verbindungselements eingraben können, so daß eine - mit geringer Kraftausübung erreichbare und dennoch sehr effektive - materialmäßige Verzahnung bzw. Verkeilung zwischen den beweglichen Elementen und dem Verbindungselement erzielt wird, was ein zuverlässiges Lösen selbst von stark festsitzenden und/oder völlig runden Verbindungselementen wie Schraubbolzen erlaubt. Eine solche materialmäßige Verzahnung bzw. Verkeilung wäre demgegenüber bei Verwendung von beweglichen Elementen mit flacher vorderer Stirnfläche grundsätzlich nicht erreichbar.

Wenn der Eingriff zwischen den Spitzen der beweglichen Elemente und dem Schraubenkopf an einer gegenüber einer axial verlaufenden Schraubenkopfkante versetzten Stelle liegt, befinden sich die Eingriffspunkte auf einem kleineren Radiuskreis als der normale, kraftübertragende Eingriffspunkt zwischen den Innenflächen des Schraubwerkzeugs und dem Schraubenkopf, so daß die Gefahr eines Abscherens der Schraubenkopfkanten erheblich reduziert ist bzw. auch bereits abgerundete Schraubenköpfe noch mit ausreichender Kraft gelöst bzw. angezogen werden können.

Zwei Löcher sind vorhanden, in denen sich jeweils ein bewegliches Element mit frontseitiger Spitze befindet, die sich diametral bezüglich der Mittelachse der Ausnehmung gegenüberliegen. Hierdurch kann der runde oder polygonale Verbindungselement-Kopf symmetrisch durch die beiden beweglichen Elemente eingespannt werden, so daß die aufgebrachten Drehkräfte auch symmetrisch auf den Schraubenkopf einwirken und somit eine optimale Drehkraft auf diesen ausüben. Die Spitzen der beweglichen Elemente dringen bei dem Festspannen der Elemente, d.h. vorzugsweise der Madenschrauben, kegelspitzförmig in das Material des Schraubenkopfes ein, so daß nicht nur eine kraft-, sondern auch eine formschlüssige Verbindung hergestellt wird, die die Übertragung sehr hoher Drehkräfte auf den Schraubenkopf ermöglicht.

Weiterhin ergibt sich der vorteilhafte Effekt einer automatischen Konterwirkung ohne zusätzliche Mittel. Die beiden als Schraubstifte oder Madenschrauben ausgebildeten spitzen Elemente wirken nämlich dann, wenn sie fest angezogen sind und somit punktförmig stark auf den Schraubenkopf drücken bzw. geringfügig in diesen eindringen, jeweils als Konterung für die gegenüberliegende Madenschraube und drücken diese derart stark gegen ihre eigenen Gewindegänge, daß -ohne Notwendigkeit zusätzlicher Kontermittel- eine auch nur geringfügige Zurückverlagerung der Madenschrauben beim Lösen der Schraube zuverlässig vermieden ist. Damit kontern sich die Madenschrauben gegenseitig selbsttätig und erlauben hohe Drehkraftübertragung.

Durch die resultierende Einspannung des Verbindungselements zwischen den sich gegenüberliegenden Spitzen der beweglichen Elemente kann zudem vermieden werden, daß das Verbindungselement an eine Seitenfläche der Werkzeugausnehmung gedrückt wird. Die Drehkraftübertragung wird in diesem Fall ausschließlich über die Elementspitzen bewirkt, so daß z.B. die Gefahr einer Beschädigung oder weiteren Abrundung der Seitenkanten des polygonalen Verbindungselement-Kopfs vermieden werden kann.

Das erfindungsgemäße Werkzeug verringert somit die Beschädigungs- und Verformungsgefahr beim Verschrauben bzw. Lösen auch von weicheren, älteren oder festsitzenden Schrauben und kann auch bereits deformierte Schraubköpfe zuverlässig betätigen. Es ist aber auch zum Auf- oder Einschrauben von auslegungsgemäß völlig runden Elementen, z. B. Schraubbolzen, sehr gut geeignet. Selbstverständlich können auch Muttern oder dgl. durch das erfindungsgemäße Werkzeug gelöst oder verschraubt werden. Weiterhin ist das erfindungsgemäße Werkzeug auch zum Auf- oder Einschrauben von Schrauben mit Köpfen mit rundem oder gewelltem Außenumfang wie etwa Schrauben mit Innenbohrungs-Sechskant mit geraden oder gewellten Innenflächen (Inbus® -Schrauben, Torx® -Schrauben) oder Torx® -Schrauben mit gewelltem Kopf-Außenumfang geeignet.

Die die Elemente aufnahmenden Löcher sind als insgesamt durch den Kopfteil hindurchgehende Löcher ausgebildet, so daß die in den Löchern angeordneten Elemente von außen betätigbar und gegebenenfalls einführbar ist. Dies erleichtert die Handhabung des erfindungsgemäßen Werkzeugs, da dieses nun beispielsweise zunächst in üblicher Weise auf das Verbindungselement, z.B. den Schraubenkopf aufgesetzt werden kann, wonach die beweglichen Elemente durch Eingriff von außen in Verspannung mit dem Schraubenkopf gebracht wird. Alle Löcher und damit alle beweglichen Elemente liegen vorzugsweise in einer einzigen, rechtwinklig zur Ausnehmungs-Mittelachse verlaufenden Ebene, so daß die axiale Länge des Werkzeugs klein gehalten werden kann.

Die die Madenschrauben aufnehmenden Durchgangslöcher tragen ein entsprechendes Innengewinde. Die Madenschrauben werden hierbei auch bei Nichtbenutzung zuverlässig im Durchgangsloch gehalten und können weiterhin in einfacher Weise bei eventueller Abnutzung ausgetauscht oder auch bei Bedarf durch eine andere Madenschraube mit anders profilierter Madenschraubspitze ersetzt werden. Wird die Madenschraube nach Aufsetzung des Werkzeugs auf den Schraubenkopf angezogen, kann sie in direkten Eingriff mit dem Schraubenkopf treten und erhebliche Kräfte auf diesen bei Drehung ausüben, da eine Zurückverlagerung der Madenschraube aufgrund ihres Gewindeeingriffs zuverlässig vermieden wird.

Vorzugsweise hat das Material der beweglichen Elemente eine höhere Zugfestigkeit als die zu lösenden Verbindungselemente, so daß die Drehkraft über die Elemente ohne Beschädigungsgefahr für diese übertragen werden kann.

In bevorzugter Ausgestaltung ist der Abstand zwischen der Mittelachse der Löcher und der (die Einführungsöffnung für den Schraubenkopf bildenden) Frontfläche des Kopfteils kleiner als die axiale Dicke des Schraubenkopfs der durch das Werkzeug zu betätigenden Schraube. Hierdurch wird erreicht, daß das bewegliche Element unmittelbar axial auf den Schraubenkopf einwirkt und somit eine optimale Verspannung mit diesem erzielen kann.

Die Löcher sind vorzugsweise so orientiert, daß sie eine ebene Innenwandfläche der inneren Ausnehmung des Kopfteils rechtwinklig schneiden. Damit läuft das bewegliche Element rechtwinklig auf das Verbindungselement, z.B. den Schraubbolzen oder den Schraubenkopf, zu und kann mit diesem effektiv in Eingriff treten. Bevorzugt ist hierbei, daß die Löcher exakt rechtwinklig zur Mittelachse der inneren Ausnehmung des Kopfteils verlaufen. Hierdurch wird sichergestellt, daß der Austrittspunkt der Löcher direkt auf einer Halbierenden einer geraden Fläche des zu betätigenden Schraubenkopfes liegt und somit an einem Punkt mit dem kleinsten Radiuskreis der Schraubenkopfaußenseite angreift. Bei einer Verdrehung des Schraubwerkzeugs verkeilen sich somit die Spitzen der beweglichen Elemente effektiv im Material des Schraubenkopfes, so daß selbst verrundete, rundköpfige, ältere und/oder sehr festsitzende Schrauben zuverlässig und ohne erhebliche Beschädigungsgefahr gedreht werden können.

Alternativ ist es aber auch möglich, die Löcher mit einem gewissen Winkel zur Radiuslinie des Kopfteils verlaufen zu lassen, so daß das bewegliche Element schräg auf den Verbindungselement-Kopf einwirkt. Hierdurch läßt sich eine Vorzugsrichtung der Kraftübertragung erreichen, beispielsweise dahingehend, daß bei einem Lösevorgang das bewegliche Element in festeren Eingriff mit der Oberfläche des Schraubenkopfes gebracht wird als bei einem Verschraubungsvorgang. In diesem Fall sind die Löcher derart schräg im Kopfteil angeordnet, daß sie, gesehen in die Richtung der Bewegung des Kopfteils beim Lösen, radial weiter innen liegend größeren Abstand zur Radiuslinie des Kopfteils besitzen als radial weiter außen liegend.

Die Anzahl der Löcher im Kopfteil und damit auch der beweglichen Elemente in diesen kann geeignet gewählt werden. Beispielsweise können bei größeren Schraubenköpfen zusätzlich zu beiden diametralen Löchern weitere Löcher mit beweglichen Elementen, z. B. eines je Schraubenkopf-Seitenfläche, vorgesehen sein. Z.B. können vier Löcher mit beweglichen Elementen im Winkelabstand von jeweils 90° vorhanden sein. Es ist auch möglich, z.B. drei Löcher mit darin befindlichen bzw. anzuordnenden beweglichen Elementen in gleichen gegenseitigen Winkelabständen von 120° vorzusehen.

Die Erfindung läßt sich bei allen Arten von Schraubwerkzeugen zum Betätigen von runden oder polygonalen Verbindungselementen, z.B. Mehrkantschrauben einsetzen, beispielsweise bei Einsätzen für Steckschlüssel bzw. den Steckschlüsseln selbst, insbesondere bei Aufsteckschlüsseln, Zündkerzenschlüsseln, Radmutternschlüsseln oder maschinenbetriebenen Kraftsteckschlüsseln. Das Werkzeug kann auch ein Einsatzring für Freilaufknarren oder eine Stecknuß bzw. ein Steckschlüsseleinsatz sein. Generell kommt als Werkzeug jedes handbetriebene oder maschinenbetriebene Schraubwerkzeug in Betracht, beispielsweise auch Maulschlüssel (Gabelschlüssel) oder geteilte oder ungeteilte Ringschlüssel. Selbstverständlich -oder sogar ausschließlich- kann das erfindungsgemäße Schraubwerkzeug auch zum Lösen und/oder Festschrauben von Muttern, Schraubstiften oder dergleichen eingesetzt werden.

Die Gestaltung der inneren Ausnehmung des Kopfteils kann runden oder auch polygonalen Querschnitt haben und besitzt z.B. drei, vier, sechs oder zwölf geradlinig verlaufende, sich gegenseitig winklig schneidende Innenwandflächen, wobei die Anzahl der Innenwandflächen jeweils an die Anzahl der geradlinig verlaufenden Außenflächen der zu betätigenden Schraube angepaßt sein oder ein Vielfaches hiervon, meistens das Doppelte, betragen kann.

Das erfindungsgemäße Werkzeug zeichnet sich auch durch universelle Einsatzmöglichkeit aus. Z.B. ermöglicht es die Anwendung sowohl bei metrischen als auch bei Zoll-Größensystemen. Durch das Einschrauben der beweglichen Elemente von unterschiedlichen, insbesondere gegenüberliegenden, Seiten in das Werkzeug bis zum Eingriff mit dem zu drehenden Verbindungselement kann der größenmäßige Unterschied zwischen Verbindungselementen gemäß dem metrischen System und dem ZollSystem vollständig ausgeglichen werden. Daher muß der Benutzer nun keine getrennten, speziellen Werkzeug-Sätze für metrisches und Zoll-System mehr anschaffen, sondern kann mit einem einzigen Werkzeug jeweils eine Mehrzahl von unterschiedlichen Verbindungselementen mit unterschiedlicher Größe oder unterschiedlicher Kopfform (runder, polygonaler oder gewellter Querschnitt) betätigen.

Des weiteren bekommt das Werkzeug durch den Eingriff der Spitzen der beweglichen Elemente mit dem zu betätigenden Verbindungselement einen sehr viel besseren Halt auf diesem, so daß die Gefahr eines unerwünschten Abrutschens des Werkzeugs vom Verbindungselement deutlich verringert ist. Hierdurch wird auch das Verletzungsrisiko des Anwenders deutlich verringert.

Die als Schraubstifte oder Madenschrauben ausgebildeten beweglichen Elemente haben vorzugsweise einen Gewindedurchmesser von etwa 3 bis 4 mm. Bei größeren Werkzeugen können allerdings auch größere Madenschrauben eingesetzt werden.

Gemäß der Erfindung ist es auch möglich, die beweglichen Elemente unterschiedlich weit in das Werkzeug einzuschrauben, so daß die Achse des Schraub-Verbindungselements gegenüber der Mittelachse der Werkzeugausnehmung versetzt ist. Beim Drehen des Werkzeugs wirkt dieses somit exzentrisch auf das Verbindungselement ein. Es hat sich gezeigt, daß hierdurch die über die Element-Spitzen übertragenen Kräfte - vermutlich aufgrund einer unterschiedlich starken Materialverschiebung und -aufhäufung vor den Spitzen bei einem anfänglichen geringfügigen Durchdrehen des Werkzeugs relativ zum Verbindungselement - eine noch effektivere Lockerung auch stark festsitzender Schrauben ermöglicht.

Wenn beim Einsatzort wenig oder kein Platz zur Betätigung der beweglichen Elemente sein sollte, ist es erfindungsgemäß auch möglich, vor dem Aufsetzen des Werkzeugs auf das zu lösende Verbindungselement die beweglichen Elemente soweit einzuschrauben, daß der gegenseitige Abstand zwischen ihren Spitzen geringer ist als die Dicke des VerbindungselementKopfs in diesem Bereich. Danach kann das Werkzeug dann auf das Verbindungselement aufgeschlagen werden, wobei sich die Elementspitzen kanalförmig durch die Umfangsoberfläche des Verbindungselements durchgraben. Bei nachfolgendem Drehen des Schraubwerkzeugs baut sich ggf. zusätzliches Material vor den Elementspitzen auf und die eingegrabenen Elementspitzen nehmen das Verbindungselement mit, so daß dieses gelöst wird.

Die Erfindung wird nachstehend anhand eines bevorzugten Ausführungsbeispiels unter Bezugnahme auf die Zeichnungen näher beschrieben. Es zeigen:
Fig. 1 ein Ausführungsbeispiel des erfindungsgemäßen Werkzeugs in Form eines Steckschlüsseleinsatzes,
Fig. 2 eine seitliche Ansicht des in Fig. 1 gezeigten Werkzeugs, wobei die Betrachtungsebene um 90 ° gedreht ist,
Fig. 3 eine Vorderansicht des in den Fig. 1 und 2 gezeigten Ausführungsbeispiels,
Fig. 4 eine Schnittansicht des in Fig. 1 gezeigten Werkzeugs entlang der in Fig. 1 dargestellten Schnittebene A-B,
Fig. 5 ein Ausführungsbeispiel des erfindungsgemäßen Werkzeugs in Form eines Ring- und/oder Maulschlüssels,
Fig. 6 eine teilweise ausgebrochene Darstellung des Werkzeugs gemäß Fig. 5,
Fig. 7 und 8 eine abgeänderte Ausführungsform des Werkzeugs gemäß den Fig. 1 bis 4 mit einem als Schraubbolzen ausgelegtem Verbindungselement, und
Fig. 9 und 10 ein Ausführungsbeispiel eines Verbindungselements.

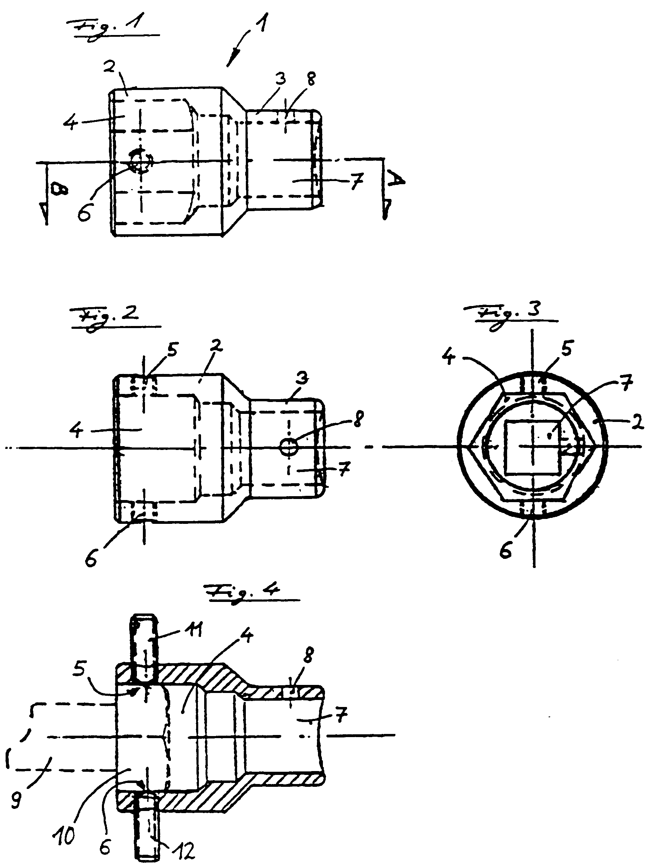

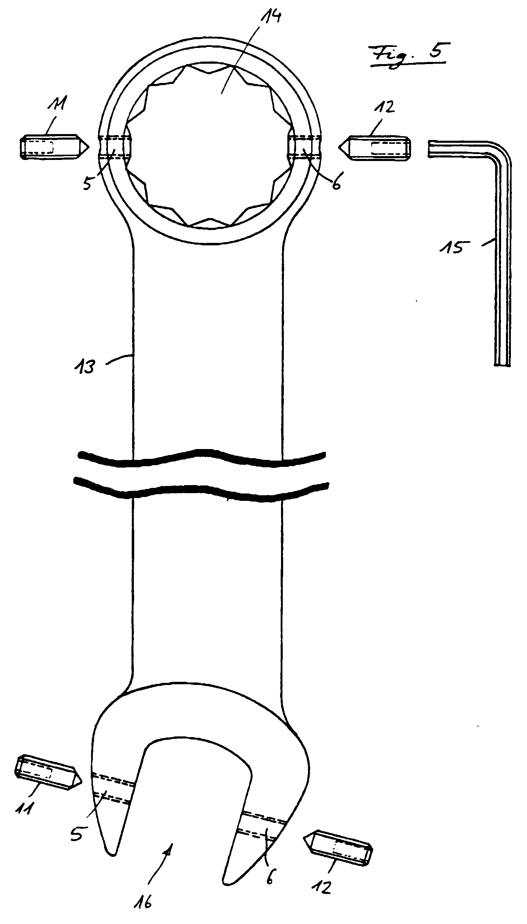

Das in den Fig. 1 bis 4 gezeigte Ausführungsbeispiel des erfindungsgemäßen Werkzeugs ist als Steckschlüsseleinsatz 1 ausgelegt, der einen Kopfteil 2 und einen Antriebsteil 3 besitzt.

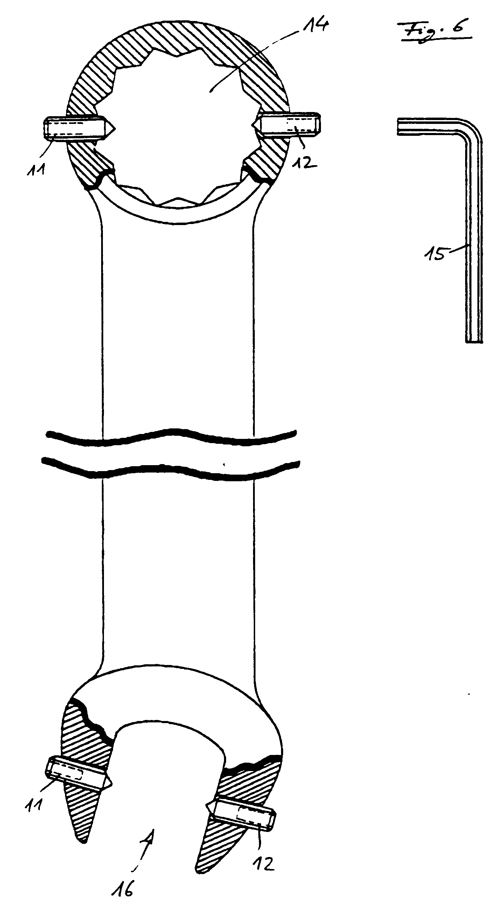

Der Kopfteil 2 ist mit einer inneren Ausnehmung 4 versehen, die, wie aus Fig. 3 am besten ersichtlich ist, im Querschnitt gesehen die Form eines Sechskants besitzt. Der Antriebsteil 3 weist seinerseits eine Vierkant-Öffnung 7 für den Eingriff mit einem nicht gezeigten Antriebselement, beispielsweise einer Ratsche, einer Winde oder einer Verlängerung auf. Im Antriebsteil 3 kann sich eine querverlaufende Durchgangsbohrung 8 befinden, die allerdings keine Funktion bei der Drehbetätigung des Steckschlüsseleinsatzes besitzt, sondern lediglich gegen axiales Herausziehen des Steckschlüssels aus der Ausnehmung 7 sichern soll.

Erfindungsgemäß ist der Steckschlüsseleinsatz mit zwei querverlaufenden Durchgangslöchern 5, 6 versehen, die ein Innengewinde aufweisen. Wie aus Fig. 3 ersichtlich ist, liegen sich die beiden Durchgangslöcher 5, 6 diametral gegenüber und verlaufen rechtwinklig zu den geradlinigen Innenwandflächen der Ausnehmung 4, wobei ihre Mittellinie direkt in der Halbierenden dieser geradlinigen Innenwandflächen liegt.

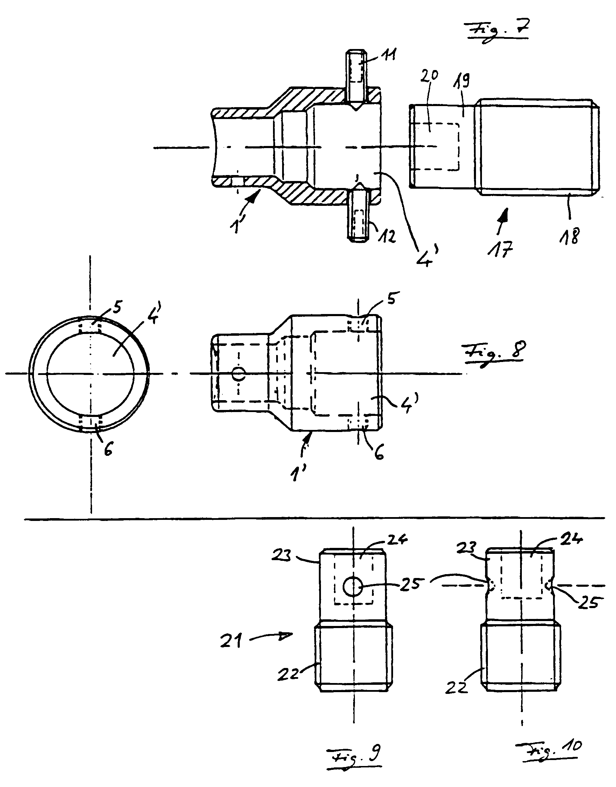

Aus Fig. 4 ist ersichtlich, daß der Abstand zwischen der Frontfläche des Steckschlüsseleinsatzes 1, über die ein Schraubenkopf 10 einer Schraube 9 in die innere Ausnehmung 4 geführt wird, und der Mittellinie der Durchgangslöcher 5, 6 kleiner ist als die axiale Dicke des Schraubenkopfes 10. Die Durchgangslöcher 5, 6 münden somit direkt auf die geradflächigen Außenkanten des Schraubenkopfes 10.

Wie in Fig. 4 gezeigt ist, sind in die Durchgangslöcher 5, 6 jeweils Schraubstifte 11, 12 eingeschraubt, die bevorzugt als Madenschrauben mit spitz zulaufenden Vorderflächen ausgelegt sind, wobei die punktförmige Spitze der Madenschrauben zentrisch auf der Madenschrauben-Mittelachse liegen. Diese vorzugsweise gehärteten Madenschrauben drücken somit mit ihren spitzen Vorderflächen mittig auf die Außenflächen des in die innere Ausnehmung 4 eingeführten Schraubenkopfes 10. Bevorzugt werden hierbei die Schraubstifte 11, 12 vor Einführung des Schraubenkopfes mittels eines Schraubendrehers oder dergleichen geringfügig nach außen geschraubt, so daß die Einführungsöffnung in vollem Umfang freiliegt und der Schraubenkopf nahezu kraftfrei in die innere Ausnehmung 4 eingeführt werden kann. Anschließend werden die Schraubstifte 11, 12 so gedreht, daß sie nach innen wandern, und zwar so weit, daß ihre Spitzenoberflächen direkt an den Außenflächen des Schraubenkopfes anliegen bzw. sich punkt- bzw. kegelspitzförmig in diese eindrücken. Bei nachfolgender Verdrehung des Steckschlüsseleinsatzes 1 wird somit die Drehkraft nicht nur über die Eckbereiche des Schraubenkopfes und der inneren Ausnehmung 4, sondern vor allem auch über die Schraubstifte 11, 12 auf den Schraubenkopf 10 übertragen, so daß eine äußerst effektive, kraftschlüssige Verbindung vorliegt. Damit lassen sich selbst sehr festsitzende, beispielsweise angerostete Schrauben oder bereits verrundete Schrauben lösen (z. B. durch Aufschlagen), ohne daß ein spezielles Werkzeug benötigt wird. Auch beim Festziehen lassen sich entsprechend erhöhte Verschraubungskräfte ohne Beschädigungsgefahr vom Steckschlüssel auf die Schraube übertragen.

Bei nicht gezeigten Ausführungsformen kann das Werkzeug auch durch einen Einsatzring für Freilaufknarren gebildet sein, wobei die Löcher und die darin befindlichen beweglichen Elemente vorzugsweise nicht nur den Einsatzring, sondern auch den außen umgreifenden Knarrenring durchsetzen, so daß die beweglichen Elemente von außen betätigt werden können. Auch Maulschlüssel und Ringschlüssel können mit den erfindungsgemäßen Durchgangslöchern und in diesen aufgenommenen beweglichen Elementen in Form von Schraubkörpern, versehen werden, wobei die relative Anordnung zwischen den Durchgangslöchern und Schraubkörpern einerseits und dem Schraubenkopf der zu betätigenden Schraube andererseits vorzugsweise die Gestaltung besitzt, wie sie aus Fig. 4 ersichtlich ist. In einem solchen Fall entfallen selbstverständlich die in Fig. 4 rechts von der Stirnfläche des Schraubenkopfes gezeigten Abschnitte.

In den Fig. 5 und 6 ist ein Ausführungsbeispiel des erfindungsgemäßen Werkzeugs in Form eines Schlüssels 13 gezeigt, der an seinem oberen Ende als Ringschlüssel und an seinem unteren Ende als Maulschlüssel ausgebildet ist. Der Schlüssel 13 kann aber auch an beiden Enden entweder nur als Ringschlüssel oder nur als Maulschlüssel mit verschiedenen Schlüsselweiten ausgebildet sein.

Der Schlüssel 13 besitzt an seinem oberen Ende eine ringförmige Ausnehmung 14 mit einem Innenzwölfkant, die zur Aufnahme eines polygonalen Schraubenkopfs entsprechender Größe ausgelegt ist, jedoch auch auf den Kopf eines runden Verbindungselements aufgeschoben werden kann. In dem die Ausnehmung 14 umgebenden Außenring sind zwei Durchgangsbohrungen 5, 6 zur Aufnahme von beweglichen Elementen in Form von Madenschrauben 11, 12 vorhanden, die in rechtem Winkel zur Mittelachse der Ausnehmung 14 verlaufen und den Innenzwölfkant jeweils im Bereich einer vorspringenden Innenkante schneiden.

Wie aus den Fig. ersichtlich ist, sind die vorzugsweise aus gehärtetem Material bestehenden Madenschrauben 11, 12 mit mittig punktförmig spitz zulaufenden Vorderflächen versehen und besitzen an ihrem hinteren Ende eine Vertiefung mit Innensechskant. Zur Betätigung der Madenschrauben wird ein Inbus- (Innenbohrungssechskant-) Schlüssel 15 verwendet. Alternativ kann die Madenschraube jedoch auch mit einem rückseitigen Drehschlitz oder dgl. versehen sein.

Bei dem unteren Ende des Schlüssels 13 ist die Ausnehmung 16 maulförmig mit zwei parallelen Backen ausgelegt, wobei die Löcher 5, 6 einander direkt gegenüberliegend rechtwinklig zu den inneren Backenflächen verlaufen und im wesentlichen mittig aus den inneren Backenflächen austreten.

In Fig. 5 sind die Madenschrauben 11, 12 im noch nicht eingeschraubten Zustand gezeigt, während sie bei der teilweise ausgebrochenen Darstellung gemäß Fig.6 in die Löcher 5, 6 im Werkzeug 13 eingeschraubt sind.

Wie aus allen Darstellungen ersichtlich ist, sind die Madenschrauben 11, 12 vorzugsweise länger als die Löcher 5, 6, so daß sie selbst in voll eingeschraubtem Zustand außenseitig noch vorstehen und damit gut zugänglich sind. Sie können allerdings auch kürzer gewählt werden.

In den Fig. 7 und 8 ist ein weiteres Ausführungsbeispiel des Werkzeugs in Form einer Stecknuß (Steckschlüsseleinsatz) 1' gezeigt, die mit Ausnahme des runden Querschnitts der inneren Ausnehmung 4' vollständig mit dem Ausführungsbeispiel gemäß den Fig. 1 bis 4 übereinstimmt. Der runde Ausnehmungsquerschnitt ist am besten aus der linken Vorderansicht in Fig. 8 erkennbar. Die Stecknuß 1' ist zur Betätigung eines runden Schraub-Verbindungselements in Form z.B. eines Schraubbolzens 17 ausgelegt, erlaubt aber auch die Drehung von polygonalen, in die Ausnehmung 4' eingeführten Schraubenköpfen, Muttern und dergleichen.

Der Schraubbolzen 17 besitzt übliche runde Gestalt mit einem Außengewindeabschnitt 18 und einem runden Kopfteil 19, in dem ein Betätigungsabschnitt 20 beispielsweise in der Form eines Innenbohrungssechskants vorgesehen ist. Zum Auf- oder Verschrauben des Schraubbolzens 17 wird im Normalfall dessen Kopfteil 19 in die Ausnehmung 4' eingebracht und dann die Madenschrauben 11, 12 so weit eingeschraubt, daß sich ihre Spitzen in die Oberfläche des Kopfteils eingraben, wonach das Werkzeug 1' über einen Verlängerungs- und/oder Ratschenhebel oder dergleichen gedreht wird.

In Fig. 9 und 10 sind zwei unterschiedliche Seitenansichten eines Ausführungsbeispiels eines dreh- bzw. schraubbaren Verbindungselements in Form eines Schraubbolzens 21 gezeigt. Der Schraubbolzen 21 besitzt - in gleicher Weise wie der Schraubbolzen 17 gemäß Fig. 7 - runde Gestalt mit einem Außengewindeabschnitt 22 und einem runden Kopfteil 23, in dem ein Betätigungsabschnitt 24 beispielsweise in der Form eines Innenbohrungssechskants vorgesehen ist. Zusätzlich weist der Schraubbolzen 21 zwei sich diametral gegenüberliegende kegelförmige Ausnehmungen 25 auf. In diese Ausnehmungen 25 können die Spitzen der Madenschrauben 11, 12 bei Benutzung des erfindungsgemäßen Werkzeugs eintreten, wodurch eine hochbelastbare Drehverbindung hergestellt wird, die zugleich auch ein unbeabsichtigtes Herausfallen des Verbindungselements aus dem Werkzeug verhindert. Die Anzahl und Position der Ausnehmungen 25 richtet sich vorzugsweise nach der Anzahl und Position der beweglichen Elemente im Werkzeug. Statt der kegelförmigen Ausnehmungen 25 können auch Ausnehmungen anderer Gestalt, insbesondere Durchgangslöcher vorgesehen sein.

Das Verbindungselement kann auch als Schraube, Stehbolzen mit im wesentlichen durchgehendem Außengewinde, Mutter oder dergleichen mit in dem Kopf-Außenumfang angeordneten Ausnehmungen 25 mit kegelförmiger oder anderer Gestalt ausgelegt sein.

## Patentansprüche

1. Werkzeug zum Drehen von drehbaren Verbindungselementen, insbesondere Mehrkantschrauben, Muttern oder runden Verbindungselementen, z.B. Stehbolzen, mit einem auf das drehbare Verbindungselement (9; 17; 21) aufsetzbaren oder an diesem ansetzbaren Kopfteil (2), der eine innere Ausnehmung (4; 4'; 14; 16) zur Aufnahme des Verbindungselements (9; 17; 21) und zwei im wesentlichen quer zur Mittelachse der inneren Ausnehmung verlaufende die gesamte Wandung des Kopfteils durchsetzende Löcher (5, 6) aufweist, die mit Innengewinde versehen sind und in denen jeweils ein quer zur Mittelachse der inneren Ausnehmung bewegliches Element (11, 12) anbringbar oder angeordnet ist,
dadurch gekennzeichnet,
daß sich die Löcher (5, 6) diametral bezüglich der Mittelachse der inneren Ausnehmung gegenüberliegen, und
daß die Elemente als Schraubstift oder Madenschraube mit vorderer Spitze ausgebildet sind.

2. Werkzeug nach Anspruch 1, dadurch gekennzeichnet, daß der Abstand zwischen der Mittelachse der Löcher (5, 6) und der Frontfläche des Kopfteils kleiner ist als die axiale Dicke des Kopfs des durch das Werkzeug zu betätigenden Verbindungselements (9; 17; 21).

3. Werkzeug nach Anspruch 1 oder 2, dadurch gekennzeichnet, daß die Löcher (5, 6) so angeordnet sind, daß sie eine ebene Innenwandfläche der inneren Ausnehmung (4) des Kopfteils (2) rechtwinklig schneiden.

4. Werkzeug nach einem der vorhergehenden Ansprüche, dadurch gekennzeichnet, daß die Löcher exakt rechtwinklig zur Mittelachse der inneren Ausnehmung (4; 4'; 14; 16) des Kopfteils (2) verlaufen.

5. Werkzeug nach einem der vorhergehenden Ansprüche, dadurch gekennzeichnet, daß das Werkzeug ein Steckschlüssel, insbesondere ein Aufsteckschlüssel, ein Zündkerzenschlüssel; ein Radmutternschlüssel oder ein maschinenbetriebener Kraftsteckschlüssel ist.

6. Werkzeug nach einem der Ansprüche 1 bis 4, dadurch gekennzeichnet, daß das Werkzeug ein Einsatzring für Freilaufknarren oder ein Steckschlüsseleinsatz ist.

7. Werkzeug nach einem der Ansprüche 1 bis 4, dadurch gekennzeichnet, daß das Werkzeug ein Maulschlüssel (Gabelschlüssel) oder ein Ringschlüssel ist.

8. Werkzeug nach einem der vorhergehenden Ansprüche, dadurch gekennzeichnet, daß die innere Ausnehmung (4') runden Querschnitt besitzt.

9. Werkzeug nach einem der Ansprüche 1 bis 7, dadurch gekennzeichnet, daß die innere Ausnehmung (4) polygonalen Querschnitt, vorzugsweise mit drei, vier, sechs oder zwölf geradlinig verlaufenden, sich gegenseitig winklig schneidenden Innenwandflächen, besitzt.

10. Werkzeug nach einem der Ansprüche 1 bis 7, dadurch gekennzeichnet, daß die innere Ausnehmung (4) gewellten Querschnitt besitzt.

11. Verfahren zum Drehen, insbesondere Lösen, eines drehbaren Verbindungselements mittels eines Werkzeugs gemäß einem der vorhergehenden Ansprüche, dadurch gekennzeichnet, daß das Werkzeug zunächst auf das zu lösende Verbindungselement auf oder an dieses angesetzt wird und dann eines oder mehrere der beweglichen Elemente (11, 12), insbesondere durch Einschrauben desbzw. derselben, so weit auf das Verbindungselement zubewegt werden, daß sich die Spitze des oder der beweglichen Elemente in die Oberfläche des Verbindungselements eingräbt, wonach das Werkzeug gedreht wird.

12. Verfahren nach Anspruch 11, dadurch gekennzeichnet, daß zunächst eines der beweglichen Elemente so weit in die Ausnehmung hineinbewegt wird, daß aufgrund der Anlageberührung zwischen diesem beweglichen Element und dem Verbindungselement die Mittelachse des Verbindungselements gegenüber der Mittelachse der Ausnehmung verschoben wird, und anschließend das gegenüberliegende bewegliche Element mit seiner Spitze in das Verbindungselement eingegraben wird, und dann das Werkzeug gedreht wird.

13. Verfahren zum Drehen, insbesondere Lösen eines drehbaren Verbindungselements mittels eines Werkzeugs gemäß einem der Ansprüche 1 bis 10, dadurch gekennzeichnet, daß zunächst, vor dem Aufsetzen des Werkzeugs auf das Verbindungselement, das oder die beweglichen Elemente (11, 12), insbesondere durch Einschrauben des- bzw. derselben, so weit in das Werkzeug hineinbewegt werden, daß der zwischen ihnen vorhandene Freiraum geringer ist als die Dicke des Kopfbereichs des Verbindungselements, und dann das Werkzeug auf den Kopfbereich des Verbindungselements aufgeschlagen wird, so daß sich die Spitzen des oder der beweglichen Elemente in die Oberfläche des Verbindungselements eingraben, wonach das Werkzeug gedreht wird.

## Claims

1. A tool for rotating rotatable connecting elements, in particular polygonal screw members, nuts or round connecting elements. for example studs, having a head portion (2) which can be fitted on to or applied to the rotatable connecting element (9; 17; 21) and which has an internal opening (4; 4'; 14: 16) for receiving the connecting element (9; 17; 21) and two holes (5, 6) which extend substantially transversely to the center line of the internal opening and which pass through the entire wall of the head portion and which are provided with an internal screwthread and in which respective elements (11, 12) which are moveable transversely to the center line of the internal opening can be disposed or are arranged, characterised in that the holes (5, 6) are disposed in diametrally opposite relationship with respect to the center line of the internal opening and that the elements are in the form of a screw pin or a grub screw with a front point.

2. A tool as set forth in claim 1 characterised in that the spacing between the center line of the holes (5, 6) and the front surface of the head portion is smaller than the axial thickness of the head of the connecting element (9; 17; 21) to be actuated by the tool.

3. A tool as set forth in claim 1 or claim 2 characterised in that the holes (5, 6) are so arranged that they intersect at a right angle a flat inside wall surface of the internal opening (4) of the head portion (2).

4. A tool as set forth in one of the preceding claims characterised in that the holes extend precisely at a right angle to the center line of the internal opening (4; 4'; 14; 16) of the heed portion (2).

5. A tool as set forth in one of the preceding claims characterised in that the tool is a socket wrench, in particular a box socket wrench, a spark plug wrench, a wheel nut wrench or a machine-operated power socket wrench.

6. A tool as set forth in one of claims 1 through 4 characterised in that the tool is an insert ring for freewheel ratchets or a socket wrench insert.

7. A tool as set forth in one of claims 1 through 4 characterised in that the tool is an open-end wrench (jaw-type wrench) or a ring wrench.

8. A tool as set forth in one of the preceding claims characterised in that the internal opening (4') is of a round cross-section.

9. A tool as set forth in one of claims 1 through 7 characterised in that the internal opening (4) is of a polygonal cross-section, preferably with three, four, six or twelve rectilinearly extending inside wall surfaces which intersect each other at an angle.

10. A tool as set forth in one of claims 1 through 7 characterised in that the internal opening (4) is of a corrugated cross-section.

11. A method of rotating and in particular loosening a rotatable connecting element by means of a tool as set forth in one of the preceding claims characterised in that the tool is firstly fitted on to or applied to the connecting element to be loosened and then one or are of the moveable elements (11, 12) is moved towards the connecting element, particularly by screwing in the moveable element or elements, to such an extent that the tip of the moveable element or elements digs into the surface of the connecting element, whereafter the tool is rotated.

12. A method as set forth in claim 11 characterised in that firstly one of the movable elements is moved into the opening to such an extent that, by virtue of the contact between said movable element and the connecting element, the center line of the connecting element is displaced relative to the center line of the opening, and then the opositely disposed movable element is dug with its tip into the connecting element, and then the tool is rotated.

13. A method of rotating and in particular loosening a rotatable connecting element by means of a tool as set forth in one of claims 1 through 10 characterised in that firstly, before the tool is fitted on to the connecting element, the movable element or elements (11, 12) is moved into the tool, in particular by screwing the movable element or elements in, to such an extent that the free space between them is smaller than the thickness of the head region of the connecting element and then the tool is knocked on to the head region of the connecting element so that the tips of the movable element or elements dig into the surface of the connecting element, whereafter the tool is rotated.

## Revendications

1. Outil pour mettre en rotation des éléments de liaison rotatifs, en particulier des vis à tête polygonales, des écrous ou des éléments de liaison ronds, par exemple des goujons, comprenant une partie de tête (2) susceptible d'être posée ou appliquée sur l'élément de liaison rotatif (9 ; 17 ; 21), laquelle présente un évidement intérieur (4 ; 4'; 14 ; 16) pour recevoir l'élément de liaison (9 ; 17 ; 21) et deux trous (5, 6) qui s'étendent sensiblement perpendiculairement à l'axe médian de l'évidement intérieur en traversant la totalité de la paroi de la partie de tête, lesdits trous étant pourvu d'un taraudage, et un élément respectif (11, 12), mobile perpendiculairement à l'axe médian de l'évidement intérieur, étant agencé ou pouvant être agencé dans lesdits trous,
caractérisé en ce que
les trous (5, 6) sont opposés diamétralement par rapport à l'axe médian de l'évidement intérieur, et
les éléments sont réalisés sous forme de tiges filetées ou de vis sans tête avec une pointe antérieure.

2. Outil selon la revendication 1, caractérisé en ce que la distance entre l'axe médian des trous (5, 6) et la surface frontale de la partie de tête est inférieure à l'épaisseur axiale de la tête de l'élément de liaison (9 ; 17 ; 21) à actionner avec d'outil.

3. Outil selon l'une ou l'autre des revendications 1 et 2, caractérisé en ce que les trous (5, 6) sont agencés de telle façon qu'ils recoupent à angle droit une surface de paroi intérieure plane de l'évidement intérieur (4) de la partie de tête (2).

4. Outil selon l'une des revendications précédentes, caractérisé en ce que les trous s'étendent exactement à angle droit par rapport à l'axe médian de l'évidement intérieur (4 ; 4' ; 14 ; 16) de la partie de tête (2).

5. Outil selon l'une des revendications précédentes, caractérisé en ce que l'outil est une clé à douille, en particulier une clé à douille à enfichage, une clé à bougies, une clé pour écrou de bicyclette, ou une clé à enfichage entraînée par moteur.

6. Outil selon l'une des revendications 1 à 4, caractérisé en ce que l'outil est une bague d'insert pour clé à cliquet, ou un insert pour clé à douille.

7. Outil selon l'une des revendications 1 à 4, caractérisé en ce que l'outil est une clé à fourche (clé à griffe) ou une clé à oeil.

8. Outil selon l'une des revendications précédentes, caractérisé en ce que l'évidement intérieur (4') possède une section arrondie.

9. Outil selon l'une des revendications 1 à 7, caractérisé en ce que l'évidement intérieur (4) possède une section polygonale, de préférence avec trois, quatre, six ou douze surfaces de paroi intérieures rectilignes, qui se recoupent mutuellement sous des angles.

10. Outil selon l'une des revendications 1 à 7, caractérisé en ce que l'évidement intérieur (4) possède une section ondulée.

11. Procédé pour faire tourner, en particulier pour détacher, un élément de liaison rotatif, au moyen d'un outil selon l'une des revendications précédentes, caractérisé en ce que l'outil est tout d'abord appliqué ou emboîté sur l'élément de liaison à détacher, et en ce qu'un ou plusieurs des éléments mobiles (11, 12) sont alors déplacés, en particulier en le ou en les vissant, aussi loin vers l'élément de liaison, que la pointe de cet ou de ces éléments mobiles s'enfoncent dans la surface de l'élément de liaison, suite à quoi l'outil est tourné.

12. Procédé selon la revendication 11, caractérisé en ce que l'on déplace tout d'abord l'un des éléments mobiles aussi loin vers l'intérieur dans l'évidement que, en raison du contact d'appui entre cet élément mobile et l'élément de liaison, l'axe médian de l'élément de liaison est déplacé par rapport à l'axe médian de l'évidement, et en ce que l'on enfonce ensuite l'élément mobile opposé avec sa pointe jusque dans l'élément de liaison, et l'outil est ensuite tourné.

13. Procédé pour fait tourner, en particulier pour détacher un élément de liaison rotatif au moyen d'un outil selon l'une des revendications 1 à 10, caractérisé en ce que, avant d'appliquer l'outil sur l'élément de liaison, on déplace tout d'abord le ou les éléments mobiles (11, 12), en particulier en le ou en les vissant, aussi loin jusque dans l'outil, que l'espace libre présent entre eux soit plus petit que l'épaisseur de la région de tête de l'élément de liaison, puis en ce que l'on applique ensuite l'outil en le frappant sur la région de tête de l'élément de liaison, de sorte que les pointes de l'élément ou des éléments mobiles s'enfoncent dans la surface de l'élément de liaison, suite à quoi on fait tourner l'outil.
